# EUROPÄISCHE PATENTSCHRIFT

(11) **EP 1 478 241 B1**
(45) Veröffentlichungstag und Bekanntmachung des Hinweises auf die Patenterteilung: **29.04.2009**
(21) Anmeldenummer: 03709712.8
(22) Anmeldetag: 19.02.2003
(51) Int. Cl.: A23G 9/28, F16M 13/02, F16B 47/00, F16M 11/08, A47G 23/06, A47G 21/00

(54) **VORRICHTUNG ZUR AUSGABE EINER GEKÜHLTEN SPEISEEISPORTION**
DEVICE FOR DISPENSING A CHILLED PORTION OF ICE CREAM
DISPOSITIF POUR SERVIR UNE PORTION DE CREME GLACE

(30) Priorität: 19.02.2002 DE 20202557 U; 05.04.2002 DE 20205275 U
(43) Veröffentlichungstag der Anmeldung: 24.11.2004
(73) Patentinhaber: Nestec S.A., 1800 Vevey (CH)
(72) Erfinder: BEER, Richard, 90451 Nürnberg (DE)
(74) Vertreter: Baumgartner Harris, Pauline
(86) Internationale Anmeldenummer: PCT/EP2003/001675
(87) Internationale Veröffentlichungsnummer: WO 2003/070016

(56) Entgegenhaltungen:
- EP-A- 0 088 351
- EP-A- 0 517 172
- WO-A-01/78520
- DE-U- 20 202 557
- DE-U- 20 205 275
- DE-U- 29 712 273
- US-A- 3 748 437
- US-A- 4 551 026
- US-A- 4 976 112
- US-A- 5 842 671
- US-B1- 6 389 836
- PATENT ABSTRACTS OF JAPAN vol. 018, no. 150 (C-1179), 14. März 1994 (1994-03-14) & JP 05 328906 A (NOBORU NAKAO), 14. Dezember 1993 (1993-12-14)

## Beschreibung

Die vorliegende Erfindung betrifft eine Vorrichtung zur Ausgabe einer gekühlten Speiseeisportion, bei der die gekühlte Speiseeisportion in einer Patrone bereitgestellt wird.

Eine Vorrichtung zur Ausgabe einer gekühlten Speiseeisportion ist beispielsweise in der WO 01/78520 A1 beschrieben. Bei der bekannten Vorrichtung wird eine Patrone mit einer darin befindlichen Speiseeisportion, die auf eine Ausgabetemperatur von etwa -10°C temperiert ist, bereitgestellt. Die Patrone ist an ihrer einen Stirnseite durch eine Abdeckung, die eine Austrittsöffnung aufweist, und an ihrer anderen Stirnseite durch einen in der Patrone bewegbaren Kolben verschlossen. Die vorbekannte Vorrichtung weist ein Halteelement für die Patrone sowie ein Halteelement für ein Eishörnchen oder einen Eisbecher auf. Die beiden Halteelemente sind dabei so an der Vorrichtung ausgebildet, dass die Austrittsöffnung der Patrone und das Eishörnchen oder der Eisbecher bei eingelegter Patrone und eingelegtem Eishörnchen/Eisbecher vertikal übereinander angeordnet sind. Zur Ausgabe der in der Patrone befindlichen gekühlten Speiseeisportion wird der in der Patrone befindliche Kolben mittels einer manuell über einen Hebel betätigten Austragsvorrichtung in Richtung der Ausgabeöffnung der Patrone bewegt, so dass die in der Patrone befindliche Speiseeisportion durch die Ausgabeöffnung in das darunter befindliche Hörnchen ausgebeben wird.

Allgemein sind die bekannten Vorrichtungen zur Ausgabe einer gekühlten Speiseeisportion so ausgestaltet, dass sie freistehend beispielsweise auf einen Tisch oder dem Deckel einer Eistruhe aufgestellt werden können. Es würde eine unverhältnismäßige Verschwendung von z. B. Verkaufsfläche bedeuten, eigens für die Vorrichtung zur Ausgabe einer gekühlten Speiseeisportion einen Tisch vorzusehen. Andererseits behindert ein Abstellen der Vorrichtung auf dem Deckel einer Eistruhe die Entnahme der in der Eistruhe befindlichen Speisen stark. Daher ist auch bekannt, an einer beispielsweise die Patronen mit der gekühlten Speiseeisportion enthaltenden Tiefkühltruhe ein spezielles Tischchen für die Vorrichtung zur Ausgabe einer gekühlten Speiseeisportion zu befestigen. Dabei ist die Größe des Tischchens auf die Vorrichtung zur Ausgabe einer gekühlten Speiseeisportion abgestimmt.

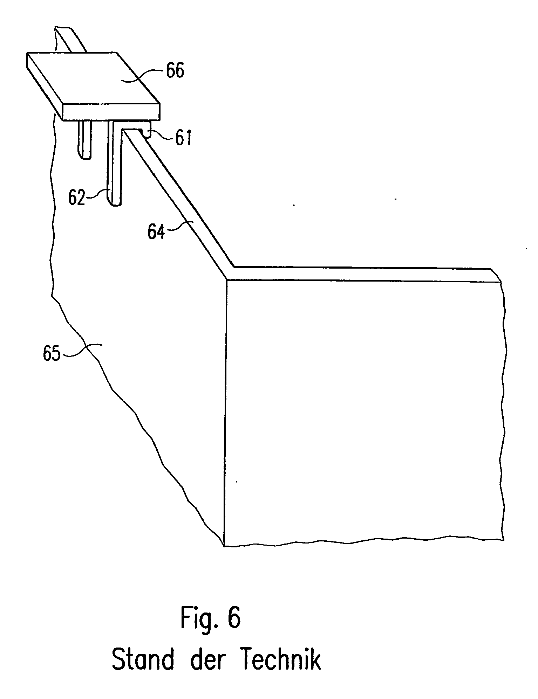

Das bekannte Tischchen für die Vorrichtung zur Ausgabe einer gekühlten Speiseeisportion ist in Figur 6 abgebildet. Das gezeigte Ablagetischchen weist zwei U-förmige Elemente 61 mit jeweils einem verlängerten Schenkel 62 auf. Die U-förmigen Elemente 61 sind ausgebildet, um in eine obere Randleiste 64 einer Tiefkühltruhe 65 eingeharkt zu werden und tragen eine horizontale Tischplatte 66, welche der Größe nach an die Vorrichtung angepasst ist. Dabei stützen sich die U-förmigen Elemente 61 mit ihren verlängerten Schenkeln 62 an einer Seitenwand der Tiefkühltruhe 65 ab, so dass die Tischplatte 66 von den U-förmigen Elementen 61 in der Horizontalen gehalten wird.

Bei dem bekannten Ablagetischchen für die Vorrichtung zur Ausgabe einer gekühlten Speiseeisportion ist es von Nachteil, dass über die von der Tiefkühltruhe in Anspruch genommene Fläche hinaus eine weitere Fläche für das Tischchen zur Verfügung gestellt werden muss. Weiter ist es von Nachteil, dass die Vorrichtung nur lose auf der Tischplatte des Tischchens angeordnet ist und somit leicht herunterfallen kann. Zusätzlich ist es von Nachteil, dass die Vorrichtung durch die Anordnung des Tischchens an einem Randbereich außerhalb der Tiefkühltruhe besonders bei einer Mehrzahl von Bedienern nur schlecht zugänglich ist. Auch können die U-förmigen Elemente des bekannten Tischchens durch versehentliches Anstoßen des Tischchens leicht aus der Randleiste der Tiefkühltruhe ausgehakt werden, so dass das Tischchen mitsamt der Vorrichtung zur Ausgabe einer gekühlten Speiseeisportion zu Boden fällt.

Weiter ist zu beachten, dass bei der Betätigung des Hebels zur Ausgabe einer gekühlten Speiseeisportion auf die bekannte Vorrichtung eine Kraft ausgeübt wird, die von der Vorrichtung aufgenommen werden muss, um ein Kippen der Vorrichtung zu vermeiden. Hierfür ist es bekannt, die im allgemeinen freistehende Vorrichtung zur Ausgabe einer gekühlten Speiseeisportion mit einem großflächigen Standfuß zu versehen. Dabei muss der Standfuß so dimensioniert sein, dass die bei einer Betätigung des Hebels auf die Vorrichtung zur Ausgabe einer gekühlten Speiseeisportion ausgeübten Kräfte sicher aufgenommen werden können und ein Kippen der Vorrichtung zuverlässig vermieden wird.

Nachteilig an den bekannten Vorrichtungen zur Ausgabe einer gekühlten Speiseeisportion ist, dass der Standfuß der Vorrichtung entweder nicht ausreichend dimensioniert ist, um die bei einer Betätigung der Vorrichtung auf die Vorrichtung einwirkenden Kräfte sicher aufzunehmen, oder aber sehr großflächig ausgebildet ist, mit der Folge, dass die Vorrichtung zur Ausgabe einer gekühlten Speiseeisportion einen hohen Flächenbedarf aufweist.

Ausgehend hiervon ist es Aufgabe der vorliegenden Erfindung, eine Halterung für eine Vorrichtung zur Ausgabe einer gekühlten Speiseeisportion zur Verfügung zu stellen, die einen minimalen Flächenbedarf aufweist und geeignet ist, die Vorrichtung an einer gut zugänglichen Stelle auch während der bei einer Betätigung auf sie einwirkenden Kräfte sicher zu halten.

Die Aufgabe wird mit den Merkmalen des unabhängigen Anspruches 1 gelöst. Eine erste Ausführungsform der Erfindung wird in den Ansprüchen 2 bis 8 ausgebildet, eine zweite Ausführungsform ist in den Ansprüchen 9 bis 19 gekennzeichnet.

Gemäß der ersten Ausführungsform wird eine Halterung für eine Vorrichtung zur Ausgabe einer gekühlten Speiseeisportion, bei der die gekühlte Speiseeisportion in einer Speiseeis-Patrone bereitgestellt wird, vorgeschlagen, wobei die Halterung eine Basisplatte für die Vorrichtung umfasst, welche ausgebildet ist, lösbar an einem oberen Randbereich einer Tiefkühltruhe befestigt zu werden, wobei die Basisplatte zwei Befestigungselemente aufweist, die miteinander einen Winkel größer null Grad einschließen und ausgebildet sind, um mit Abschnitten des oberen Randbereichs der Tiefkühltruhe, die den selben Winkel zueinander einschließen, lösbar in Eingriff zu kommen, und die Basisplatte ferner eine vertikale Säule trägt, die ausgebildet ist, um die Vorrichtung zur Ausgabe einer gekühlten Speiseeisportion zu halten.

Mit der erfindungsgemäß vorgeschlagenen Halterung ist es möglich, eine Vorrichtung zur Ausgabe einer gekühlten Speiseeisportion oberhalb einer Tiefkühltruhe anzuordnen, so dass die erfindungsgemäße Halterung keine zusätzliche Fläche in Anspruch nimmt. Weiter ist die mittels der beanspruchten Halterung angeordnete Vorrichtung auch für mehrere Benutzer gut zugänglich, da die Vorrichtung innerhalb der von der Tiefkühltruhe eingenommenen Fläche angeordnet werden kann, und somit in der Regel von allen Seiten der Tiefkühltruhe aus gut erreichbar ist. Da die Vorrichtung gemäß der vorliegenden Erfindung zudem von einer Säule gehalten wird, welche wiederum von einer Basisplatte der Halterung getragenen wird, kann die erfindungsgemäße Halterung wirkungsvoll verhindern, dass die Vorrichtung versehentlich umgestoßen wird, zu Boden fällt und beschmutzt oder beschädigt wird.

Soll die Vorrichtung zur Ausgabe einer gekühlten Speiseeisportion von mehreren Benutzern abwechselnd bedient werden können, ist es besonders vorteilhaft, wenn die Säule der erfindungsgemäßen Halterung ausgebildet ist, um eine Drehung einer von der Säule gehaltenen Vorrichtung zur Ausgabe einer gekühlten Speiseeisportion um die Säule herum zu erlauben, da die Vorrichtung so durch einfaches Drehen jedem Benutzer optimal zugänglich gemacht werden kann.

Um ein Herunterfallen der erfindungsgemäßen Halterung insgesamt zu vermeiden sind die beiden Befestigungselemente gemäß einer bevorzugten Ausführungsform ausgebildet, um mit dem Randbereich der Tiefkühltruhe in Schnappverbindung zu kommen. Gemäß einer alternativen Ausführungsform können die beiden Befestigungselemente jedoch auch ausgebildet, um mit dem Randbereich der Tiefkühltruhe in Klemmverbindung zu kommen.

Weiter kann die erfindungsgemäße Halterung durch das Ausbilden der beiden Befestigungselemente für eine Schnapp- bzw. Klemmverbindung auf besonders schnelle und unkomplizierte Weise an einer Tiefkühltruhe befestigt werden.

Gemäß einer besonders bevorzugten Ausführungsform ist es von Vorteil, wenn die Halterung ferner einen Tragarm aufweist, der drehbar an der Säule befestigt ist und mit der Säule einen Neigungswinkel größer null Grad einschließt, wobei die Vorrichtung zur Ausgabe einer gekühlten Speiseeisportion an dem Tragarm befestigt ist, da so auf einfache Weise eine definierte Neigung der Vorrichtung gegenüber der Vertikalen erzielt werden kann, die es einem Benutzer ermöglicht, die Funktionsweise der Vorrichtung bequem visuell zu kontrollieren.

Um eine gute Zugänglichkeit der in der Tiefkühltruhe befindlichen Waren weiterhin zu gewährleisten ist es besonders vorteilhaft, wenn die beiden Befestigungselemente und die Basisplatte so ausgestaltet sind, dass ein unter der Basisplatte angeordneter Schiebedeckel der Kühltruhe verschiebbar bleibt.

Damit die erfindungsgemäße Vorrichtung auf einer handelsüblichen Tiefkühltruhe mit rechteckiger Grundfläche angeordnet werden kann, schließen die beiden Befestigungselemente miteinander vorzugsweise einen Winkel von 90 Grad ein.

Gemäß der zweiten Ausführungsform der Erfindung wird eine Vorrichtung zur Ausgabe einer gekühlten Speiseeisportion, bei der die gekühlte Speiseeisportion in einer Speiseeis-Patrone bereitgestellt wird, vorgeschlagen, wobei die Vorrichtung einen Standfuß umfasst, und der Standfuß einen Saugfuß aufweist, der ausgebildet ist, um mit einer im wesentlichen glatten und formstabilen Oberfläche lösbar in Eingriff zu kommen.

Da der Standfuß der erfindungsgemäßen Vorrichtung zur Ausgabe einer gekühlten Speiseeisportion einen Saugfuß aufweist, der mit einer im wesentlichen glatten und formstabilen Oberfläche in Eingriff kommen kann, ist es zum einen möglich, die für den Standfuß und somit für die erfindungsgemäße Vorrichtung erforderliche Fläche zu minimieren. Zum anderen können die bei einer Betätigung der erfindungsgemäßen Vorrichtung auf diese einwirkenden Kräfte sicher aufgenommen werden, so dass die Vorrichtung gegen ein Kippen und/oder Herunterfallen gesichert ist. Da die erfindungsgemäße Vorrichtung weiter sehr unempfindlich gegen auf sie einwirkende Stöße ist, kann sie auch von mehreren Benutzern abwechselnd sicher bedient werden.

Um ein Kippen und/oder Herunterfallen der erfindungsgemäßen Vorrichtung besonders zuverlässig zu vermeiden weist der Saugfuß gemäß einer besonders bevorzugten Ausführungsform ein Spannelement auf, das mit dem Saugfuß in Wirkverbindung steht und ausgebildet ist, um zwischen dem Saugfuß und einer darunter befindlichen Oberfläche eine Volumenänderung zu bewirken.

Somit kann mittels des Spannelements zwischen dem Saugfuß und einer darunter befindlichen Oberfläche bei Bedarf ein Unterdruck erzeugt werden, aufgrund dessen der Saugfuß und damit die erfindungsgemäße Vorrichtung sicher und durch Betätigung des Spannelements einfach lösbar an der darunter befindlichen Oberfläche gehalten wird.

Um eine größere Freiheit bei der Gestaltung des Spannelements zu erhalten ist es weiter vorteilhaft, wenn das Spannelement über ein Verbindungselement mit einem zentralen Bereich des Saugfußes verbunden ist.

Vorzugsweise ist das Spannelement in Form eines Spannhebels ausgebildet, wobei der Spannhebel wenigstens einen Hebelarm sowie einen Drehpunkt aufweist, der Spannhebel in dem Drehpunkt schwenkbar gegenüber der Säule gelagert ist, und der wenigstens eine Hebelarm mit dem Saugfuß in Wirkverbindung steht.

Gemäß einer besonders bevorzugten Ausführungsform weist der Spannhebel zwei Hebelarme auf, wobei die beiden Hebelarme zueinander einen Winkel kleiner 180 Grad einschließen, und einer der beiden Hebelarme mit dem Saugfuß in Wirkverbindung steht.

Durch die Ausbildung des Spannelements in Form eines Spannhebels, der an der Säule der erfindungsgemäßen Vorrichtung gelagert ist, ist es aufgrund des physikalischen Hebelgesetzes möglich, die Volumenänderung zwischen dem Saugfuß und einer darunter befindlichen Oberfläche mit besonders geringem Kraftaufwand zu bewirken.

Weiter ist es von Vorteil, wenn das Spannelement gegenüber der Vorrichtung arretierbar ist.

Besonders vorteilhaft ist es jedoch, wenn das Spannelement so ausgebildet ist, dass sich aufgrund einer von dem Saugfuß auf das Spannelement in Folge einer Volumenvergrößerung zwischen dem Saugfuß und einer darunter befindlichen Oberfläche ausgeübten Kraft eine Selbstarretierung des Spannelementes ergibt.

Um eine Bewegung des Spannelements zu erlauben kann in der erfindungsgemäßen Vorrichtung eine Öffnung ausgebildet sein. Aus ästhetischen Gründen und um einen Schmutzeintrag in das Innere der Vorrichtung zu vermeiden ist es dann besonders vorteilhaft, wenn das Spannelement so ausgebildet ist, dass ein Abschnitt des Spannelements zumindest einen Teil der in der Vorrichtung ausgebildeten Öffnung verschließt, wenn das Spannelement eine Volumenvergrößerung zwischen dem Saugfuß und einer darunter befindlichen Oberfläche bewirkt.

Um eine versehentliche Fehlbedienung des Spannelements zu vermeiden und einen harmonischen Gesamteindruck der erfindungsgemäßen Vorrichtung zu wahren ist es ferner vorteilhaft, wenn das Spannelement und der Standfuß so ausgebildet sind, dass eine Oberfläche des Spannelements bündig mit einer Oberfläche des Standfußes abschließt, wenn das Spannelement eine Volumenvergrößerung zwischen dem Saugfuß und einer darunter befindlichen Oberfläche bewirkt.

Eine maximale Standfestigkeit der erfindungsgemäßen Vorrichtung zur Ausgabe einer gekühlten Speiseeisportion im Bezug auf die von dem Standfuß der Vorrichtung eingenommene Fläche lässt sich erzielen, wenn sich der Saugfuß über die ganze der im wesentlichen glatten und formstabilen Oberfläche zugewandte Seite des Standfußes erstreckt.

Da die erfindungsgemäße Vorrichtung sehr unempfindlich gegen auf sie einwirkende Vibrationen oder Stöße ist, ist es möglich, die erfindungsgemäße Vorrichtung auf einem Deckel einer Tiefkühltruhe anzuordnen, wobei der Deckel mit der daran befestigten Vorrichtung weiterhin bewegt werden kann, um auf in der Tiefkühltruhe befindliche Speiseeispatronen zugreifen zu können. Ferner ist die auf dem Deckel der Tiefkühltruhe angeordnete Vorrichtung auch für mehrere Benutzer gut zugänglich, da die von der Tiefkühltruhe eingenommenen Fläche in der Regel von allen Seiten der Tiefkühltruhe aus gut erreichbar ist.

Im Folgenden wird die vorliegende Erfindung anhand von Figuren näher erläutert.
Dabei zeigt
- Figur 1: schematisch den Aufbau einer erfindungsgemäßen Halterung für eine Vorrichtung zur Ausgabe einer gekühlten Speiseeisportion gemäß einer ersten bevorzugten Ausführungsform;
- Figuren 2, 3 und 4: im Querschnitt alternative Ausgestaltungen der Befestigungselemente der erfindungsgemäßen Halterung;
- Figur 5: schematisch den Aufbau einer erfindungsgemäßen Halterung für eine Vorrichtung zur Ausgabe einer gekühlten Speiseeisportion gemäß einer ersten abgewandelten Ausführungsform;
- Figur 6: schematisch den Aufbau eines Tischchens für eine Vorrichtung zur Ausgabe einer gekühlten Speiseeisportion nach dem Stand der Technik.
- Figur 7: schematisch den Aufbau einer zweiten Ausführungsform einer erfindungsgemäßen Vorrichtung zur Ausgabe einer gekühlten Speiseeisportion und
- Figuren 8a, 8b: Querschnitte durch wesentliche Elemente der Vorrichtung aus Figur 7.

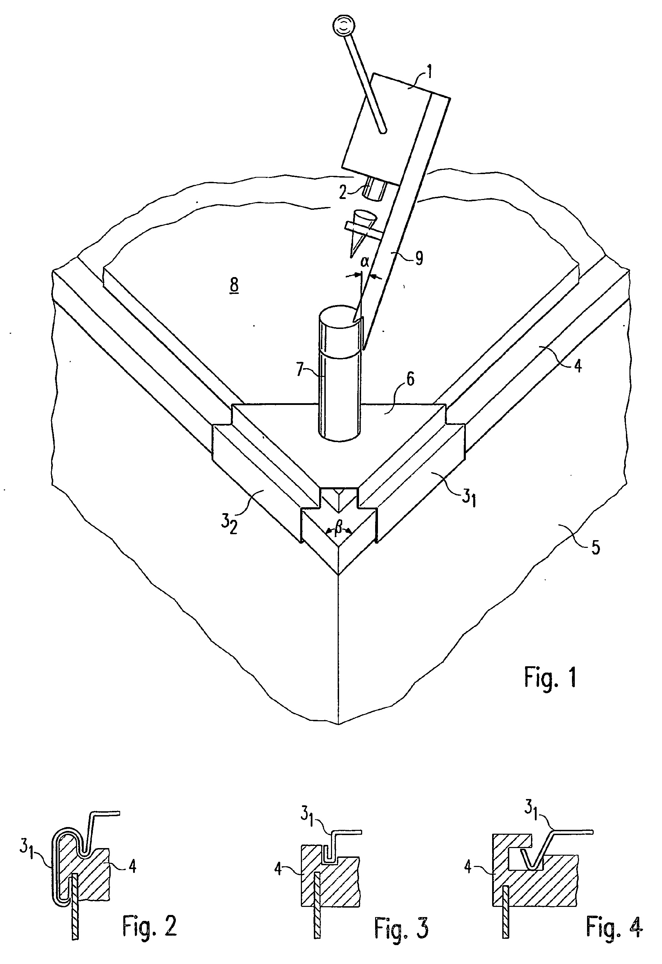

In den Figuren 1 bis 5 sind gleiche Elemente mit den gleichen Bezugszeichen versehen.

Figur 1 zeigt schematisch den Aufbau einer ersten bevorzugten Ausführungsform einer erfindungsgemäßen Haltung für eine Vorrichtung 1 zur Ausgabe einer gekühlten Speiseeisportion, bei der die gekühlte Speiseeisportion in einer Patrone 2 bereitgestellt wird.

Die in Figur 1 gezeigte Halterung umfasst ein Basisplatte 6, die zwei Befestigungselemente 3₁, 3₂ aufweist, wobei die beiden Befestigungselemente 3₁, 3₂ in der Horizontalen miteinander einen Winkel β größer null Grad einschließen. Die Befestigungselemente 3₁, 3₂ sind so ausgebildet, dass sie mit Abschnitten des oberen Randbereichs 4 einer Tiefkühltruhe 5, die in der Horizontalen den selben Winkel β einschließen, lösbar in Eingriff kommen können. Dabei sind die Basisplatte 6 und die beiden Befestigungselemente 3₁, 3₂ vorzugsweise so ausgestaltet, das ein unter der Basisplatte 6 angeordneter Schiebedeckel 8 der Kühltruhe 5 bei montierter Halterung verschoben werden kann. In der in Figur 1 gezeigten bevorzugten Ausführungsform sind die Basisplatte 6 und die Befestigungselemente 3₁, 3₂ einstückig aus Blech ausgebildet. Alternativ können diese Elemente jedoch beispielsweise auch aus Plastik ausgebildet sein oder sich aus unterschiedlichen Materialien zusammensetzen.

In der dargestellten bevorzugten Ausführungsform beträgt der Winkel β zwischen den Befestigungselementen 3₁, 3₂ neunzig Grad, so dass die Befestigungselemente 3₁, 3₂ in einem Eckbereich einer Tiefkühltruhe 5 mit rechtwinkligem Grundriss angeordnet werden, und mit entsprechenden Abschnitten des Randbereichs 4 der Tiefkühltruhe 5 in Eingriff kommen können.

Allgemein ist es jedoch vorteilhaft, wenn der Winkel β zwischen den Befestigungselementen 3₁, 3₂ zwischen 45 Grad und 135 Grad beträgt, da das von den Befestigungselementen 3₁, 3₂ aufspannte räumliche Dreibein, welches die Basisplatte 6 trägt, in diesem Winkelbereich eine besonders gute Standfestigkeit aufweist. Folglich kann bei einem solchen Aufbau der erfindungsgemäßen Halterung auf eine allgemein sehr vorteilhafte kraftschlüssige Verbindung zwischen den Befestigungselementen 3₁, 3₂ und dem Randbereich 4 der Tiefkühltruhe 5 verzichtet werden.

Damit ist es möglich, die Befestigungselemente 3₁, 3₂ beispielsweise so auszugestalten, dass sie in eine Rille eingelegt werden können, die in dem Randbereich 4 der Tiefkühltruhe 5 ausgebildet ist. Dies ist in Figur 3 dargestellt und erlaubt eine besonders flexible Positionierung der erfindungsgemäßen Halterung an der Tiefkühltruhe 5.

Wie in den Figuren 2 und 4 gezeigt ist es alternativ jedoch besonders vorteilhaft, die Befestigungselemente 3₁, 3₂ so auszugestalten, dass sie mit dem Randbereich 4 der Tiefkühltruhe 5 in Klemmverbindung oder Schnappverbindung kommen. Hierbei kann auch ein Umgreifen des Randbereiches 4 erfolgen. Durch das Vorsehen einer derartigen lösbaren kraftschlüssigen Verbindung zwischen den Befestigungselementen 3₁, 3₂ und dem Randbereich 4 der Tiefkühltruhe 5 kann die erfindungsgemäße Halterung besonders zuverlässig gegen ein Herunterfallen gesichert werden. Weiter kann die erfindungsgemäße Halterung somit auch an Tiefkühltruhen 5 vorgesehen werden, bei denen das von den Befestigungselementen 3₁, 3₂ aufgespannte räumliche Dreibein aufgrund eines ungünstigen Verlaufs des Randbereichs 4 und eines daraus resultierenden ungünstigen Winkels β alleine keine ausreichende Standfestigkeit der Halterung garantieren würde.

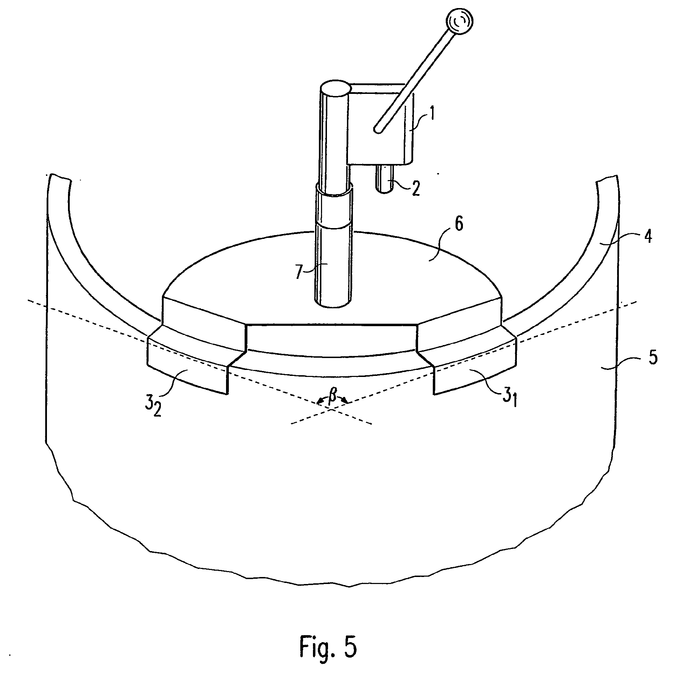

Weist die Tiefkühltruhe hingegen einen ovalen oder runden Grundriss auf, wie es in Figur 5 anhand einer ersten abgewandelten Ausführungsform der erfindungsgemäßen Halterung gezeigt ist, so sind die Befestigungselemente 3₁, 3₂ der erfindungsgemäßen Halterung so auszubilden, dass sie mit Abschnitten des oberen Randbereichs 4 einer Tiefkühltruhe 5 in Eingriff kommen können, deren Tangenten den selben Winkel β wie die Befestigungselemente 3₁, 3₂ einschließen. Bei einer solchen Konstellation ist es weiter vorteilhaft, die Befestigungselemente 3₁, 3₂ bogenförmig auszugestalten.

Wie in aus den Figuren 1 und 5 weiter hervorgeht, trägt die Basisplatte 6 eine vertikale Säule 7, welche die Vorrichtung 1 zur Ausgabe einer gekühlten Speiseeisportion hält.

Dabei ist - wie in Figur 1 dargestellt - an der Säule 7 vorzugsweise ein Tragarm 9 für die Vorrichtung 1 befestigt, der mit der Säule 7 einen Neigungswinkel α größer null Grad einschließt und um die Säule 7 drehbar ist.

Folglich ist auch die an dem Tragarm 9 befestigte Vorrichtung 1 gegen die Säule 7 und somit gegen die Vertikale geneigt, was einem Benutzer eine bequeme visuelle Kontrolle der Vorrichtung 1 erleichtert und eine sichere Bedienung der Vorrichtung 1 ermöglicht. Ein Neigungswinkel α von zwischen 5° und 20° und insbesondere zwischen 10° und 15° gegen die Vertikale hat sich als besonders vorteilhaft erwiesen.

Alternativ kann die Vorrichtung 1 jedoch auch unmittelbar drehbar (oder auch drehfest) von der Säule 7 gehalten werden, wie es in Figur 5 gezeigt ist.

Eine um die Säule 7 der erfindungsgemäßen Halterung drehbare Anordnung der Vorrichtung 1 erlaubt dabei eine auch für mehrere Benutzer besonders bequeme Bedienung der Vorrichtung 1, da die Vorrichtung 1 einem Benutzer durch Drehen schnell und einfach zugänglich gemacht werden kann.

Somit ist es mit der erfindungsgemäß vorgeschlagenen Halterung möglich, eine Vorrichtung 1 zur Ausgabe einer gekühlten Speiseeisportion oberhalb einer Tiefkühltruhe 5 anzuordnen, so dass die erfindungsgemäße Halterung keine zusätzliche Fläche in Anspruch nimmt. Weiter ist die mit der erfindungsgemäßen Halterung befestigte Vorrichtung 1 aufgrund ihrer relativ zentralen Anordnung auch für mehrere Benutzer gut zugänglich und über die von der Basisplatte 6 der Halterung getragene Säule 7 gegen ein Herunterfallen gesichert. Auch kann die gute Zugänglichkeit der in der Tiefkühltruhe 5 befindlichen Waren weiterhin gewährleistet werden, da die Bewegung von Schiebedeckel 8 der Tiefkühltruhe 5 durch die erfindungsgemäße Halterung vorzugsweise nicht eingeschränkt wird.

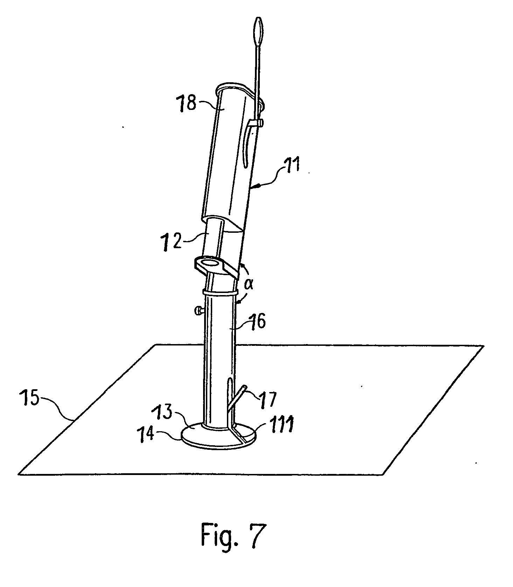

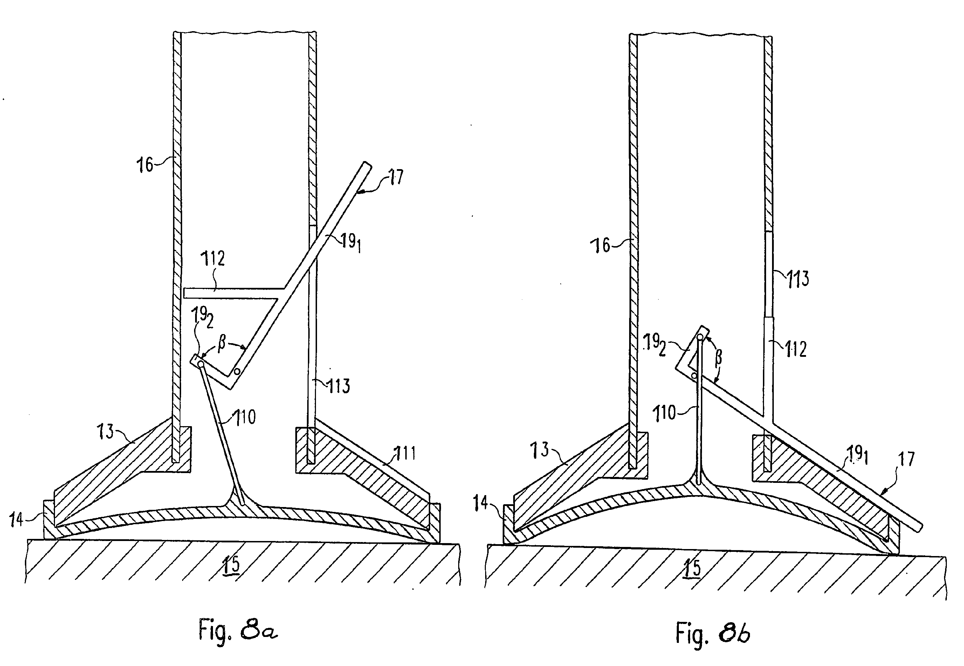

In den Figuren 7, 8a und 8b sind gleichwirkende Elemente mit den gleichen Bezugszeichen versehen.

Figur 7 zeigt schematisch den Aufbau einer zweiten Ausführungsform einer erfindungsgemäßen Vorrichtung 11 zur Ausgabe einer gekühlten Speiseeisportion, bei der die gekühlte Speiseeisportion in einer Speiseeis-Patrone 12 bereitgestellt wird.

Die in Figur 7 gezeigte Vorrichtung 11 umfasst eine vertikale Säule 16, deren eines Ende von einem Standfuß 13 getragen wird, und deren anderes Ende eine Austrageinrichtung 18 sowie eine Halterung für eine Speiseeis-Patrone 12 aufweist.

Die Austrageinrichtung 18 umfasst einen Hebel und einen mit dem Hebel in Wirkverbindung stehenden Stempel (nicht gezeigt), und ist ausgebildet, um in der Speiseeis-Patrone 12 befindliches Speiseeis auszutragen. Dazu ist der Stempel der Austrageinrichtung 18 geeignet, um einen in der Speiseeis-Patrone 12 befindlichen Kolben zu bewegen.

Bei der in Figur 7 gezeigten Vorrichtung 11 zur Ausgabe einer gekühlten Speiseeisportion schließt die Austrageinrichtung 18 mit der Säule 16 einen stumpfen Winkel α ein. Weiter ist die Befestigung der Austrageinrichtung 18 an der Säule 16 so ausgestaltet, dass eine Drehung der Austrageinrichtung 18 um die Säule 16 herum möglich ist.

Dies erlaubt zum einen eine optimale Anpassung der Austrageinrichtung 18 der Vorrichtung 11 zur Ausgabe einer gekühlten Speiseeisportion an mehrere Benutzer, da die Austrageinrichtung 18 einem Benutzer durch Drehen schnell und einfach zugänglich gemacht werden kann. Zum anderen erleichtert die vertikale Neigung der Austrageinrichtung 18 gegenüber der Säule 16 eine visuelle Kontrolle der Austrageinrichtung 18 und somit eine sichere Bedienung der Austrageinrichtung 18 durch einen Benutzer.

Gemäß der vorliegenden Erfindung weist der die Säule 16 und damit die Austrageinrichtung 18 tragende Standfuß 13 einen Saugfuß 14 auf.

Der Saugfuß 14 ist so ausgebildet, dass er mit einer im Wesentlichen glatten und formstabilen Oberfläche 15 eines Deckels einer (nicht gezeigten) Tiefkühltruhe für die Speiseeis-Patronen 12 lösbar in Eingriff kommen kann. Vorzugsweise ist der Saugfuß 14 dafür aus Gummi oder einem vergleichbaren elastischen Material gebildet.

Da über den Saugfuß eine sichere Verbindung zwischen einer den Standfuß der erfindungsgemäßen Vorrichtung tragenden Oberfläche und dem Standfuß herstellbar ist, kann der Standfuß entsprechend klein dimensioniert werden, so dass die erfindungsgemäße Vorrichtung nur einen kleinen Flächenbedarf aufweist. Gleichwohl können die bei einer Bedienung der Vorrichtung auf sie einwirkenden Kräfte sicher aufgenommen werden.

Um eine schnell herstellbare und einfach wieder lösbare Verbindung der Vorrichtung 11 an dem Deckel 15 der Tiefkühltruhe mittels des den Saugfuß 14 aufweisenden Standfußes 13 zu ermöglichen, weist die erfindungsgemäße Vorrichtung 11 gemäß der dargestellten Ausführungsform weiter ein Spannelement 17 in Form eines Spannhebels auf.

Wie insbesondere aus den Figuren 8a und 8b deutlich wird, weist der Spannhebel 17 zwei Hebelarme 19₁, 19₂ auf, die zueinander einen Winkel β von 90 Grad einschließen, und ist der Spannhebel 17 gegenüber der Säule 16 um einen Drehpunkt schwenkbar gelagert.

Das freie Ende des kürzeren Hebelarms 19₂ des Spannhebels 17 ist über ein Verbindungselement 110 mit einem zentralen Bereich des Saugfußes 14 verbunden. Dabei ist das Verbindungselement 110 vorzugsweise einstückig mit dem Saugfuß 14 ausgebildet. Selbstverständlich kann es sich bei dem Verbindungselement 110 jedoch auch um ein separates Element handeln, oder kann der Hebelarm 19₂ direkt mit dem Saugfuß 14 verbunden sein.

In der gezeigten besonders bevorzugten Ausführungsform ist der Spannhebel 17 zwischen zwei Positionen bewegbar, wobei eine Bewegung des Spannhebels 17 von der einen zu der anderen Position eine Volumenänderung des von dem Saugfuß 14 und dem darunter befindlichen Deckel 15 der Tiefkühltruhe umschlossenen Volumens bewirkt. Um diese Bewegung des Spannhebels 17 zu erlauben, ist in der Säule 16 eine schlitzförmige Öffnung 113 ausgebildet.

Konkret bewirkt eine Bewegung des Spannhebels 17 von der in Figur 8a gezeigten ersten Position in die in Figur 8b gezeigte zweite Position eine Vergrößerung des von dem Saugfuß 14 und dem darunter befindlichen Deckel 15 umschlossenen Volumens. Diese Volumenvergrößerung hat einen Unterdruck in dem umschlossenen Volumen zur Folge, durch den der Saugfuß 14 des Standfußes 13 und damit die Vorrichtung 11 zur Ausgabe einer gekühlten Speiseeisportion sicher auf dem Deckel 15 gehalten wird.

Entsprechend bewirkt eine Bewegung des Spannhebels 17 von der in Figur 8b gezeigten zweiten Position in die in Figur 8a gezeigte erste Position eine Verkleinerung des von dem Saugfuß 14 und dem darunter befindlichen Deckel 15 umschlossenen Volumens. Hierdurch wird ein evtl. vorhandener Unterdruck in dem von dem Saugfuß 14 und dem darunter befindlichen Deckel 15 umschlossenen Volumen abgebaut, so dass die erfindungsgemäße Vorrichtung 11 von dem Deckel 15 abgehoben werden kann.

Wie aus den Figuren 8a und 8b weiter hervorgeht, ist der Spannhebel 17 gemäß der dargestellten besonders bevorzugten Ausführungsform so ausgebildet, dass sich auf Grund einer in Folge eines Unterdrucks von dem Saugfuß 14 auf den Spannhebel 17 ausgeübten Kraft eine Selbstarretierung des Spannhebels 17 ergibt. Diese Selbstarretierung ist darauf zurückzuführen, dass bei einer Bewegung des Spannhebels 17 von der ersten in die zweite Position ein Maximalwert der von dem Saugfuß 14 auf den Spannhebel 17 ausgeübten Kraft überschritten wird, so dass es für eine Bewegung des Spannhebels 17 von der zweiten in die erste Position zunächst wiederum erforderlich ist, diesen Maximalwert der von dem Saugfuß 14 auf den Spannhebel 17 ausgeübten Kraft zu überschreiten.

Gemäß einer nicht dargestellten alternativen Ausführungsform ist es jedoch auch ohne weiteres möglich, den Spannhebel und die Säule und/oder den Standfuß so auszugestalten, dass eine Arretierung des Spannhebels gegenüber der Säule oder dem Standfuß beispielsweise durch eine Schnappverbindung möglich ist.

Weiter sind der Spannhebel 17 und der Standfuß 13 gemäß der in den Figuren 8a und 8b gezeigten Ausführungsform so ausgebildet, dass eine Oberfläche des Spannhebels 17 bündig mit einer Oberfläche des Standfußes 13 abschließt, wenn sich der Spannhebel 17 in der zweiten Position (siehe Figur 8b) befindet. Hierfür weist der Standfuß 13 eine Vertiefung 111 auf, die geeignet ist, den Hebelarm 19₁ des Spannhebels 17 zumindest teilweise aufzunehmen.

Durch diese Maßnahme - die im übrigen nur fakultativ ist - wird nicht nur der optische Gesamteindruck der erfindungsgemäßen Vorrichtung 11 verbessert, sondern auch die Gefahr einer unbeabsichtigten Betätigung des Spannhebels 17 wirkungsvoll verringert.

Um einen Schmutzeintrag in das Innere der Säule 16 zu vermeiden und aus ästhetischen Gründen ist es ferner vorteilhaft, wenn der Spannhebel 17 eine Blende 112 trägt, die zumindest einen Teil der in die Säule 16 eingebrachten Öffnung 113 verschließt, wenn sich der Spannhebel 17 in der in Figur 8b gezeigten zweiten Position befindet.

Wie insbesondere aus den Figuren 8a und 8b deutlich wird, erstreckt sich der Saugfuß 14 der erfindungsgemäßen Vorrichtung 11 zur Ausgabe einer gekühlten Speiseeisportion gemäß der gezeigten bevorzugten Ausführungsform über die ganze dem Deckel 15 der Tiefkühltruhe zugewandte Seite des Standfußes 13. Hierdurch wird bezogen auf die von dem Standfuß 13 der Vorrichtung 11 eingenommene Fläche eine maximale Standfestigkeit der Vorrichtung erzielt.

Alternativ können der Standfuß jedoch auch mehrere kleinere Saugfüße aufweisen.

Gemäß einer nicht eigens dargestellten alternativen Ausführungsform der erfindungsgemäßen Vorrichtung kann der Saugfuß auch so ausgebildet sein, dass durch Druck auf den Saugfuß eine Volumenverringerung zwischen dem Saugfuß und einer darunter befindlichen Oberfläche bewirkt und eine entsprechende Luftmenge verdrängt wird. Dabei ist der Saugfuß aufgrund seiner Formgebung und des elastischen Materials, aus dem er gebildet ist, bestrebt, wieder seine ursprüngliche Form einzunehmen und somit die vorhergegangene Volumenverringerung rückgängig zu machen. Hieraus resultiert ein Unterdruck in dem Volumen zwischen dem Saugfuß und der darunter befindlichen Oberfläche, aufgrund dessen der Saugfuß und damit der Standfuß der erfindungsgemäßen Vorrichtung fest auf der Oberfläche gehalten wird. Somit kann gemäß dieser alternative Ausführungsform auf ein Spannelement verzichtet werden.

Zusammenfassend ist es mit der erfindungsgemäß vorgeschlagenen Vorrichtung zur Ausgabe einer gekühlten Speiseeisportion möglich, die Vorrichtung über einen Saugfuß eines Standfußes des Vorrichtung lösbar mit einer im wesentlichen glatten und formstabilen Oberfläche zu verbinden. Somit kann die erfindungsgemäße Vorrichtung die bei einer Betätigung einer in die erfindungsgemäße Vorrichtung integrierten Austrageinrichtung für in einer Speiseeis-Patrone befindliches Speiseeis anfallenden Kräfte sicher aufnehmen. In der Folge kann der Standfuß der erfindungsgemäßen Vorrichtung entsprechend klein dimensioniert werden, so dass der Flächenbedarf der erfindungsgemäßen Vorrichtung gering ist.

## Patentansprüche

1. Vorrichtung zur Ausgabe einer gekühlten Speiseeisportion, bei der die gekühlte Speiseeisportion in einer Speiseeis-Patrone (2) bereitgestellt wird, mit einer Standsäule (7; 16), über die die Vorrichtung (1) an einem oberen Bereich (4; 15) einer Tiefkühltruhe (5) angeordnet wird,
**dadurch gekennzeichnet,**
**dass** die Standsäule (7; 16) mittels einer lösbaren Halterung an dem oberen Randbereich (4) oder einer oberen Oberfläche (15) der Tiefkühltruhe (5) befestigt ist.

2. Vorrichtung nach Anspruch 1,
**dadurch gekennzeichnet,**
**dass** die Standsäule (7) der Halterung eine Basisplatte (6) mit zwei Befestigungselementen (3₁, 3₂) aufweist, die miteinander einen Winkel (β) größer null Grad einschließen und ausgebildet sind, um mit dem Abschnitt des oberen Randbereichs (4) der Tiefkühltruhe (5), die den selben Winkel (β) zueinander einschließen, lösbar in Eingriff zu kommen.

3. Vorrichtung nach Anspruch 2,
**dadurch gekennzeichnet,**
**dass** die Säule (7) ausgebildet ist, um eine Drehung einer von der Säule (7) gehaltenen Vorrichtung (1) zur Ausgabe einer gekühlten Speiseeisportion um die Säule (7) herum zu erlauben.

4. Vorrichtung nach Anspruch 2 oder 3,
**dadurch gekennzeichnet,**
**dass** die beiden Befestigungselemente (3₁, 3₂) ausgebildet sind, um mit dem Randbereich (4) der Tiefkühltruhe (5) in Schnappverbindung zu kommen.

5. Vorrichtung nach Anspruch 2 oder 3,
**dadurch gekennzeichnet,**
**dass** die beiden Befestigungselemente (3₁, 3₂) ausgebildet sind, um mit dem Randbereich (4) der Tiefkühltruhe (5) in Klemmverbindung zu kommen.

6. Vorrichtung nach einem der Ansprüche 2 bis 5,
**dadurch gekennzeichnet,**
**dass** die Halterung ferner einen Tragarm (9) aufweist, der drehbar an der Säule (7) befestigt ist und mit der Säule (7) einen Neigungswinkel (α) größer null Grad einschließt, wobei die Vorrichtung (1) zur Ausgabe einer gekühlten Speiseeisportion an dem Tragarm (9) befestigt ist.

7. Vorrichtung nach einem der Ansprüche 2 bis 6,
**dadurch gekennzeichnet,**
**dass** die beiden Befestigungselemente (3₁, 3₂) und die Basisplatte (6) so ausgestaltet sind, dass ein unter der Basisplatte (6) angeordneter Schiebedeckel (8) der Kühltruhe (5) verschiebbar ist.

8. Vorrichtung nach einem der Ansprüche 2 bis 7,
**dadurch gekennzeichnet,**
**dass** die beiden Befestigungselemente (3₁, 3₂) miteinander einen Winkel (β) von 90 Grad einschließen.

9. Vorrichtung nach Anspruch 1,
**dadurch gekennzeichnet,**
**dass** die Standsäule (16) einen Standfuß (13) mit einem Saugfuß (14) aufweist, der ausgebildet ist, um mit einer im Wesentlichen glatten und formstabilen Oberfläche (15) lösbar in Eingriff zu kommen.

10. Vorrichtung nach Anspruch 9,
**dadurch gekennzeichnet,**
**dass** der Standfuß (13) ferner ein Spannelement (17) aufweist, das mit dem Saugfuß (14) in Wirkverbindung steht und ausgebildet ist, um zwischen dem Saugfuß (14) und einer darunter befindlichen Oberfläche (15) eine Volumenänderung zu bewirken.

11. Vorrichtung nach Anspruch 10,
**dadurch gekennzeichnet,**
**dass** das Spannelement (17) über ein Verbindungselement (110) mit einem zentralen Bereich des Saugfußes (14) verbunden ist.

12. Vorrichtung nach Anspruch 10 oder 11,
**dadurch gekennzeichnet,**
**dass** das Spannelement (17) in Form eines Spannhebels ausgebildet ist, wobei der Spannhebel wenigstens einen Hebelarm (19₁,19₂) sowie einen Drehpunkt aufweist, der Spannhebel in dem Drehpunkt schwenkbar gegenüber der Vorrichtung (11) gelagert ist, und der wenigstens eine Hebelarm (19₂) mit dem Saugfuß (14) in Wirkverbindung steht.

13. Vorrichtung nach Anspruch 12,
**dadurch gekennzeichnet,**
**dass** der Spannhebel zwei Hebelarme (19₁,19₂) aufweist, wobei die beiden Hebelarme (19₁,19₂) zueinander einen Winkel (β) kleiner 180 Grad einschließen, und einer der beiden Hebelarme (19₂) mit dem Saugfuß (14) in Wirkverbindung steht.

14. Vorrichtung nach einem der Ansprüche 10 bis 13,
**dadurch gekennzeichnet,**
**dass** das Spannelement (17) gegenüber der Vorrichtung (1) arretierbar ist.

15. Vorrichtung nach einem der Ansprüche 10 bis 13,
**dadurch gekennzeichnet,**
**dass** das Spannelement (17) so ausgebildet ist, dass sich auf Grund einer von dem Saugfuß (14) auf das Spannelement (17) in Folge einer Volumenvergrößerung zwischen dem Saugfuß (14) und einer darunter befindlichen Oberfläche (15) ausgeübten Kraft eine Selbstarretierung des Spannelementes (17) ergibt.

16. Vorrichtung nach einem der Ansprüche 10 bis 15,
**dadurch gekennzeichnet,**
**dass** in der Vorrichtung (1) eine Öffnung (113) ausgebildet ist, um eine Bewegung des Spannelements (17) zu erlauben, und
**dass** das Spannelement (17) so ausgebildet ist, dass ein Abschnitt (112) des Spannelements (17) zumindest einen Teil der in der Vorrichtung ausgebildeten Öffnung (113) verschließt, wenn das Spannelement (17) eine Volumenvergrößerung zwischen dem Saugfuß (14) und einer darunter befindlichen Oberfläche (15) bewirkt.

17. Vorrichtung nach einem der Ansprüche 10 bis 16,
**dadurch gekennzeichnet,**
**dass** das Spannelement (17) und der Standfuß (13) so ausgebildet sind, dass eine Oberfläche des Spannelements (17) bündig mit einer Oberfläche des Standfußes (13) abschließt, wenn das Spannelement (17) eine Volumenvergrößerung zwischen dem Saugfuß (14) und einer darunter befindlichen Oberfläche (15) bewirkt.

18. Vorrichtung nach einem der Ansprüche 9 bis 17,
**dadurch gekennzeichnet,**
**dass** sich der Saugfuß (14) über die ganze der im Wesentlichen glatten und formstabilen Oberfläche (15) zugewandte Seite des Standfußes (13) erstreckt.

19. Vorrichtung nach einem der Ansprüche 9 bis 18,
**dadurch gekennzeichnet,**
**dass** es sich bei der im Wesentlichen glatten und formstabilen Oberfläche (15) um einen Deckel einer Tiefkühltruhe handelt.

## Claims

1. Device for dispensing a chilled portion of ice cream, in which the chilled portion of ice cream is provided in an ice cream cartridge (2), comprising a pedestal (7; 16), via which the device (1) is arranged on an upper area (4; 15) of a chest freezer (5),
**characterised in that**
the pedestal (7; 16) is fastened by means of a detachable holding device to the upper edge area (4) or an upper surface (15) of the chest freezer (5).

2. Device according to Claim 1,
**characterised in that**
the pedestal (7) of the holding device comprises a base plate (6) having two fastening elements (3₁, 3₂) which together enclose an angle (β) which is greater than zero degrees and which are configured to come into releasable engagement with the portion of the upper edge area (4) of the chest freezer (5), which enclose the same angle (β) relative to one another.

3. Device according to Claim 2,
**characterised in that**
the pillar (7) is configured to allow a rotation about the pillar (7) of a device (1) held by the pillar (7) for dispensing a chilled portion of ice cream.

4. Device according to Claim 2 or 3,
**characterised in that**
the two fastening elements (3₁, 3₂) are configured to be connected to the edge area (4) of the chest freezer (5) by a snap-on connection.

5. Device according to Claim 2 or 3,
**characterised in that**
the two fastening elements (3₁, 3₂) are configured to be connected to the edge area (4) of the chest freezer (5) by a clamping connection.

6. Device according to one of Claims 2 to 5,
**characterised in that**
the holding device further comprises a supporting arm (9) which is rotatably fastened to the pillar (7), and with the pillar (7) encloses an angle of inclination (α) which is greater than zero degrees, the device (1) for dispensing a chilled portion of ice cream being fastened to the supporting arm (9).

7. Device according to one of Claims 2 to 6,
**characterised in that**
the two fastening elements (3₁, 3₂) and the base plate (6) are designed such that a sliding cover (8) of the chest freezer (5) arranged under the base plate (6) is displaceable.

8. Device according to one of Claims 2 to 7,
**characterised in that**
the two fastening elements (3₁, 3₂) together enclose an angle (β) of 90 degrees.

9. Device according to Claim 1,
**characterised in that**
the pedestal (16) comprises a foot (13) with a suction cup (14), which is configured to come into releasable engagement with a surface (15) which is substantially smooth and dimensionally stable.

10. Device according to Claim 9,
**characterised in that**
the foot (13) further comprises a tensioning element (17) which cooperates with the suction cup (14) and is configured to cause an alteration to the volume between the suction cup (14) and a surface (15) located thereunder.

11. Device according to Claim 10,
**characterised in that**
the tensioning element (17) is connected via a connecting element (110) to a central area of the suction cup (14).

12. Device according to Claim 10 or 11,
**characterised in that**
the tensioning element (17) is configured in the form of a tensioning lever, the tensioning lever comprising at least one lever arm (19₁, 19₂), as well as a pivot point, the tensioning lever being rotatably mounted relative to the device (11) on the pivot point and the at least one lever arm (19₂) cooperating with the suction cup (14).

13. Device according to Claim 12,
**characterised in that**
the tensioning lever comprises two lever arms (19₁, 19₂), the two lever arms (19₁, 19₂) enclosing an angle (β) which is less than 180 degrees relative to one another, and one of the two lever arms (19₂) cooperating with the suction cup (14).

14. Device according to one of Claims 10 to 13,
**characterised in that**
the tensioning element (17) may be locked in position relative to the device (1).

15. Device according to one of Claims 10 to 13,
**characterised in that**
the tensioning element (17) is configured such that, due to a force exerted by the suction cup (14) onto the tensioning element (17) as a result of an increase in the volume between the suction cup (14) and a surface (15) located thereunder, a self-locking of the tensioning element (17) results.

16. Device according to one of Claims 10 to 15,
**characterised in that**
an aperture (113) is formed in the device (1) in order to permit a movement of the tensioning element (17), and
**in that** the tensioning element (17) is configured such that a portion (112) of the tensioning element (17) closes at least one part of the aperture (113) formed in the device when the tensioning element (17) causes an increase in the volume between the suction cup (14) and a surface (15) located thereunder.

17. Device according to one of Claims 10 to 16,
**characterised in that**
the tensioning element (17) and the foot (13) are configured such that a surface of the tensioning element (17) terminates flush with a surface of the foot (13) when the tensioning element (17) causes an increase in the volume between the suction cup (14) and a surface (15) located thereunder.

18. Device according to one of Claims 9 to 17,
**characterised in that**
the suction cup (14) extends over the entire side of the foot (13) facing the surface (15) which is substantially smooth and dimensionally stable.

19. Device according to one of Claims 9 to 18,
**characterised in that**
the surface (15) which is substantially smooth and dimensionally stable is a lid of a chest freezer.

## Revendications

1. Dispositif pour la délivrance d'une portion de glace alimentaire refroidie, la portion de glace alimentaire refroidie étant mise à disposition dans une cartouche de glace alimentaire (2), comprenant une colonne fixe (7 ; 16), par laquelle le dispositif (1) est disposé sur une zone (4 ; 15) supérieure d'un congélateur-bahut (5),
**caractérisé en ce que**
la colonne fixe (7 ; 16) est fixée au moyen d'un support amovible sur la zone périphérique (4) supérieure ou une surface (15) supérieure du congélateur-bahut (5).

2. Dispositif selon la revendication 1,
**caractérisé en ce que**
la colonne fixe (7) du support présente une plaque de base (6), avec deux éléments de fixation (3₁, 3₂) qui forment l'un avec l'autre un angle (β) supérieur à zéro degré et sont conçus pour venir en prise de façon amovible avec le tronçon de la zone périphérique (4) supérieure du congélateur bahut (5), qui forment le même angle (β) l'un par rapport à l'autre.

3. Dispositif selon la revendication 2,
**caractérisé en ce que**
la colonne (7) est conçue pour permettre une rotation d'un dispositif (1) maintenu par la colonne (7) pour la délivrance d'une portion de glace alimentaire refroidie autour de la colonne (7).

4. Dispositif selon la revendication 2 ou 3,
**caractérisé en ce que**
les deux éléments de fixation (3₁, 3₂) sont conçus pour venir en liaison d'encliquetage avec la zone périphérique (4) du congélateur-bahut (5).

5. Dispositif selon la revendication 2 ou 3,
**caractérisé en ce que**
les deux éléments de fixation (3₁, 3₂) sont conçus pour venir en liaison de serrage avec la zone périphérique (4) du congélateur-bahut (5).

6. Dispositif selon l'une quelconque des revendications 2 à 5,
**caractérisé en ce que**
le support présente également un bras porteur (9) qui est fixé de façon rotative sur la colonne (7) et forme avec la colonne (7) un angle d'inclinaison (α) supérieur à zéro degré, le dispositif (1) étant fixé pour la délivrance d'une portion de glace alimentaire refroidie sur le bras porteur (9).

7. Dispositif selon l'une quelconque des revendications 2 à 6,
**caractérisé en ce que**
les éléments de fixation (3₁, 3₂) et la plaque de base (6) sont conçus de telle sorte qu'un couvercle coulissant (8), disposé sous la plaque de base (6), du congélateur-bahut (5) peut coulisser.

8. Dispositif selon l'une quelconque des revendications 2 à 7,
**caractérisé en ce que**
les deux éléments de fixation (3₁, 3₂) forment l'un avec l'autre un angle (β) de 90 degrés.

9. Dispositif selon la revendication 1,
**caractérisé en ce que**
la colonne fixe (16) présente un pied fixe (13) avec un pied d'aspiration (14), qui est conçu pour venir en prise de façon amovible avec une surface (15) sensiblement lisse et indéformable.

10. Dispositif selon la revendication 9,
**caractérisé en ce que**
le pied fixe (13) présente également un élément de serrage (17) qui est en liaison active avec le pied d'aspiration (14) et est conçu pour entraîner une variation de volume entre le pied d'aspiration (14) et une surface (15) se trouvant au-dessous.

11. Dispositif selon la revendication 10,
**caractérisé en ce que**
l'élément de serrage (17) est relié par un élément de liaison (110) à une zone centrale du pied d'aspiration (14).

12. Dispositif selon la revendication 10 ou 11,
**caractérisé en ce que**
l'élément de serrage (17) est conçu sous la forme d'un levier de serrage, le levier de serrage présentant au moins un bras de levier (19₁, 19₂) ainsi qu'un point de rotation, lequel levier de serrage est logé au point de rotation de façon pivotante par rapport au dispositif (11), et lequel au moins un bras de levier (19₂) est en liaison active avec le pied d'aspiration (14).

13. Dispositif selon la revendication 12,
**caractérisé en ce que**
le levier de serrage présente deux bras de levier (19₁, 19₂), les deux bras de levier (19₁, 19₂) formant l'un par rapport à l'autre un angle (β) inférieur à 180 degrés, et l'un des deux bras de levier (19₂) est en liaison active avec le pied d'aspiration (14).

14. Dispositif selon l'une quelconque des revendications 10 à 13,
**caractérisé en ce que**
l'élément de serrage (17) peut être bloqué par rapport au dispositif (1).

15. Dispositif selon l'une quelconque des revendications 10 à 13,
**caractérisé en ce que**
l'élément de serrage (17) est conçu de telle sorte que, sur la base d'une force exercée par le pied d'aspiration (14) sur l'élément de serrage (17) en conséquence d'une augmentation de volume entre le pied d'aspiration (14) et une surface (15) se trouvant au-dessous, on obtient un autoblocage de l'élément de serrage (17).

16. Dispositif selon l'une quelconque des revendications 10 à 15,
**caractérisé en ce que**
une ouverture (113) est conçue dans le dispositif (1) afin de permettre un déplacement de l'élément de serrage (17), et
**en ce que** l'élément de serrage (17) est conçu de façon qu'un tronçon (112) de l'élément de serrage (17) ferme au moins une partie de l'ouverture (113) conçue dans le dispositif lorsque l'élément de serrage (17) entraîne une augmentation de volume entre le pied d'aspiration (14) et une surface (15) se trouvant au-dessous.

17. Dispositif selon l'une quelconque des revendications 10 à 16,
**caractérisé en ce que**
l'élément de serrage (17) et le pied fixe (13) sont conçus de telle sorte qu'une surface de l'élément de serrage (17) se termine en affleurement avec une surface du pied fixe (13) lorsque l'élément de serrage (17) entraîne une augmentation de volume entre le pied d'aspiration (14) et une surface (15) se trouvant au-dessous.

18. Dispositif selon l'une quelconque des revendications 9 à 17,
**caractérisé en ce que**
le pied d'aspiration (14) s'étend sur l'ensemble du côté, tourné vers la surface (15) sensiblement lisse et indéformable, du pied fixe (13).

19. Dispositif selon l'une quelconque des revendications 9 à 18,
**caractérisé en ce que**
en ce qui concerne la surface (15) sensiblement lisse et indéformable, il s'agit d'un couvercle d'un congélateur-bahut.
